## Europäisches Patentamt
## European Patent Office
## Office européen des brevets

(11) Numéro de publication: **0 198 730**
**B1**

(12)
# FASCICULE DE BREVET EUROPÉEN

(45) Date de publication du fascicule du brevet:
**14.12.88**

(51) Int. Cl.⁴: **B 01 J 23/94**, B 01 J 38/00

(21) Numéro de dépôt: **86400438.7**

(22) Date de dépôt: **03.03.86**

(54) **Procédé de régénération d'un catalyseur usagé par une solution aqueuse de peroxyde d'hydrogène stabilisée par un composé organique.**

(30) Priorité: **08.03.85 FR 8503409**

(43) Date de publication de la demande:
**22.10.86 Bulletin 86/43**

(45) Mention de la délivrance du brevet:
**14.12.88 Bulletin 88/50**

(84) Etats contractants désignés:
**BE DE GB IT NL**

(56) Documents cité:
**DE-A-2 948 771**
**DE-B-1 296 130**
**GB-A-1 221 975**
**US-A-4 268 415**

(73) Titulaire: **INSTITUT FRANCAIS DU PETROLE, 4, Avenue de Bois- Préau, F-92502 Rueil- Malmaison (FR)**

(72) Inventeur: **Trinh, Dinh Chan, 7, Allée des Oeillets, F-78110 Le Vesinet (FR)**
Inventeur: **Desvard, Alain, 45, avenue des Tulipes, F-78310 Elancourt (FR)**
Inventeur: **Martino, Germain, Batiment Condé 80, avenue F. Lefebvre, F-78300 Poissy (FR)**

LIBER, STOCKHOLM 1988

**Description**

La présente invention concerne un procédé de régénération d'un catalyseur au moins partiellement désactivé provenant du traitement d'une charge d'hydrocarbures renfermant au moins un hétéroélément du groupe soufre, oxygène et azote et au moins un métal du groupe vanadium, nickel et fer, ladite désactivation provenant du dépôt desdits métaux sur le catalyseur initialement constitué d'un support minéral et d'au moins un métal actif ou un composé de métal actif du groupe VI B et/ou VIII.

Par métal du groupe VI et VIII, on entend les métaux tels que molybdène, tungstène, cobalt, nickel notamment.

La présente invention est relative plus particulièrement à la régénération des catalyseurs d'hydrotraitement et/ou d'hydroconversion des bruts de pétrole et des fractions pétrolières à point d'ébullition élevé, par exemple supérieur à 350°C, tels que les résidus de distillation atmosphérique ou sous-vide, une huile de schistes ou de sable bitumineux, une fraction d'asphalte ou une fraction d'hydrocarbures liquides résultant de la liquéfaction du charbon, des gas-oils atmosphériques ou sous-vides ou encore des fuels.

Elle peut éventuellement s'appliquer aux catalyseurs d'hydrocraquage ou de craquage catalytique.

Elle peut également servir de base pour la récupération d'importantes quantités de métaux surtout dans le cas des catalyseurs utilisés pour le traitement de charges lourdes de pétrole. Par exemple, on peut récupérer 7000 tonnes de vanadium par an si l'on traite 16 000 m3/jour du pétrole brut d'Orinoco.

Dans les opérations d'hydrotraitement (hydrodésulfuration, hydrodéazotation, hydrodémétallation), d'hydrocraquage ou de craquage catalytique, le catalyseur utilisé se couvre peu à peu de dépôts de coke et de métaux qui proviennent des charges lourdes traitées.

Par métal on doit comprendre vanadium, nickel et/ou fer qui sont les trois plus importants parmi les métaux présents mais l'invention ne se limitera pas à ces seuls trois métaux.

La rétention des métaux et du coke sur le support du catalyseur provoque des diminutions de volume poreux et de surface spécifique qui par voie de conséquence limitent la diffusion des molécules d'hydrocarbures vers les sites catalytiques à l'intérieur du grain du catalyseur. Il s'ensuit une perte progressive d'activité catalytique qui peut être totale lorsque tous les pores du support sont remplis de vanadium, de nickel et/ou de fer.

La régénération de catalyseurs empoisonnés par les métaux cités a fait l'objet de nombreuses publications et demandes de brevets d'invention.

Parmi les solutions proposées, le peroxyde d'hydrogène a très souvnet été utilisé, soit seul en solution aqueuse, soit combiné à des lavages réducteurs ou à des lavages d'acides minéraux en solutions diluées (nitrique, sulfurique, chlorhydrique), soit associé à des hétéropolyacides ou à des sels basiques par exemple carbonate de sodium.

D'autre part les extractions de vanadium et de nickel par les solutions aqueuses de peroxyde d'hydrogène ont été généralement effectuées à partir de ces métaux à l'état de sulfures soit directement sur les catalyseurs usagés et/ou usés soit à la suite d'une présulfuration par divers agents sulfurants, le plus souvent par l'acide sulfhydrique, lorsque les catalyseurs usagés ne contenaient pas suffisamment de soufre.

L'explication généralement donnée est que cette présulfuration fait migrer les métaux à la surface du grain du catalyseur. L'extraction de vanadium et de nickel est de ce fait plus aisée.

Le brevet US-3 562 150 décrit l'extraction de vanadium à partir des sulfures de vanadium thermodynamiquement stables ($V_2S_3$, $V_2V_5$). Ce brevet fait la démonstration que pour obtenir les meilleurs résultats, l'extraction de vanadium des catalyseurs usagés par les solutions de peroxyde d'hydrogène doit précéder l'opération de calcination en présence d'air à 510°C pendant 16 heures. Si on inverse l'ordre de ces deux traitements, l'extraction des métaux et l'activité du catalyseur régénéré sont nettement moins bonnes.

Le procédé commercial de démétallation des catalyseurs usagés de SINCLAIR DEMET PROCESS publié dans "The oil and Gas journal" du 27 août 1962, pages 92 à 96, et dans un article intitulé "The demetallization of cracking catalysts" publié dans I & EC Product Research and Development, volume 2, pages 238 à 332, décembre 1963, ou encore dans "Hydrocarbon Processing à Petroleum Refiner" volume 41, n° 7, juillet 1962, indique que l'extraction des métaux par les solutions aqueuses de peroxyde d'hydrogène doit être précédée également d'une étape de présulfuration par l'acide sulfhydrique.

Le brevet US-4 101 444 indique que l'extraction des métaux par le peroxyde d'hydrogène doit être précédée d'un traitement de lavage par un agent réducteur qui est l'anhydride sulfureux dissous dans l'eau.

Enfin le brevet US-4 268 415 note que l'extraction des métaux est effectuée directement à partir des sulfures métalliques des catalyseurs usagés après lavage par des solvants organiques et/ou doit être précédée de sulfuration préalable par l'acide sulfhydrique dans le cas où le catalyseur mis à traiter par le peroxyde d'hydrogène ne contient pas suffisamment de soufre. Ce brevet montre que l'addition d'une quantité convenable de peroxyde d'hydrogène améliore nettement l'extraction des métaux par les hétéropolyacides.

Les travaux du demandeur ont montré que les procédés connus présentaient plusieurs inconvénients:

- attaque appréciable du support de catalyseur, lorsque celui-ci renferme de l'alumine, ou de la silice alumine ou un support zéolitique, par l'acide sulfurique formé au cours de l'extraction des métaux à l'état de sulfures,
- forte décomposition du peroxyde d'hydrogène en eau et en oxygène gazeux au contact des supports minéraux des catalyseurs et par les ions métalliques extraits, rendant le procédé peu économique,
- degré de réactivation parfois insuffisant dû apparemment à un enlèvement insuffisant des métaux indésirables.

2

0 198 730

L'objet de la présente invention est la régénération d'un catalyseur avec consommation réduite de peroxyde d'hydrogène. Il permet également d'obtenir un taux d'extraction de métaux et un taux de réactivation élevés.

Pour minimiser, voire éviter la décomposition du peroxyde d'hydrogène en eau et en oxygène gaz eux au contact du support du catalyseur et par les ions métalliques extraits et pour éviter une attaque substantielle du support, donc pour rendre le procédé d'extraction des métaux contaminants des catalyseurs économique, la présente invention propose un procédé de régénération d'un catalyseur au moins partiellement désactivé provenant du traitement d'une charge d'hydrocarbure renfermant au moins un hétéroélément du groupe soufre, oxygène et azote et au moins un métal du groupe vanadium, nickel et fer, ladite désactivation provenant du dépôt d'au moins un métal dudit groupe sur le catalyseur. Le catalyseur est initialement constitué l'un support minéral et d'au moins un métal actif ou un composé de métal actif du groupe VI B et/ou VIII; le procédé comportant une calcination puis la mise en contact de ce catalyseur avec une solution de peroxyde d'hydrogène est caractérisé par les étapes successives suivantes:

a) on calcine le catalyseur en présence d'un gaz renfermant de l'oxygène de façon à éliminer au moins 90 % du soufre,

b) on met en contact le catalyseur provenant de l'étape a) avec une solution aqueuse de peroxyde d'hydrogène renfermant au moins un composé organique stabilisateur comportant au moins un groupement fonctionnel polaire de façon à enlever au moins 10 % des métaux déposés du groupe vanadium, nickel et fer et,

c) on sépare le catalyseur régénéré de la solution aqueuse d'ions métalliques.

Les conditions opératoires de la calcination sont ajustées de manière à éliminer au moins 90 % de soufre, de préférence au moins 99 %, et à minimiser la formation des sulfates métalliques. Les sulfures métalliques sont transformés en oxydes correspondants, par exemple les sulfures métalliques de vanadium sont transformés notamment en anhydride vanadique ($V_2O_5$).

On élimine par la même occasion le coke ou le carbone déposé sur le catalyseur usagé.

D'une façon générale, les températures de calcination peuvent se situer dans l'intervalle entre 300 et 600°C et de préférence entre 450 et 550°C. La calcination à température plus élevée risque de modifier la structure du support.

Les rapports moles oxygène du gaz/atome-gramme du soufre des sulfures métalliques nécessaires pour transformer les sulfures métalliques en oxydes correspondants sont avantageusement supérieurs à 2, de préférence égaux ou supérieurs à 10.

D'autre part, les débits horaires d'air doivent être suffisants pour évacuer rapidement l'anhydride sulfureux et/ou sulfurique formé vers l'extérieur du tube de calcination, évitant ainsi une sulfatation des oxydes, qui sous la forme de sulfates peuvent être difficilement extraits. La teneur en oxygène et le débit horaire d'air doivent être suffisants pour que la teneur en anhydride sulfureux soit à chaque instant inférieure à 10 ppm.

La durée de calcination est généralement de deux à quinze heures et de préférence de 2 à 7 heures pour les catalyseurs peu chargés en soufre et de 8 à 15 heures pour les catalyseurs très chargés en soufre (taux supérieur à quelques pourcents poids, par exemple sensiblement supérieur à 3 %).

En présence d'une solution aqueuse de peroxyde d'hydrogène et d'un composé organique stabilisateur, les métaux se trouvant surtout sous la forme d'oxydes sont extraits sous forme d'ions peroxydés et par exemple le vanadium est en majorité sous forme d'ions pervanadiques $[VO(O_2)]^+$ et/ou $VO_2^+$, par exemple.

Le composé organique stabilisateur peut être ajouté au peroxyde d'hydrogène soit avant la mise en contact du catalyseur avec la solution, soit pendant la mise en contact.

Les composés organiques comportant au moins un groupement fonctionnel peuvent être des acides carboxyliques, des amines alcools des acides alcools, des phénols, des alcools et leurs mélanges.

Les composés organiques qui stabilisent très bien les solutions aqueuses de peroxyde d'hydrogène au contact des supports des catalyseurs et qui permettent d'obtenir des taux d'extraction des métaux très élevés avec un minimum de consommation de peroxyde d'hydrogène sont choisis de préférence dans le groupe formé par l'acide salicylique, l'acide L(+) ascorbique, l'acide citrique, l'acide maléique, l'acide oxalique, le 1-4 butanediol et le phénol.

Le tertiobutanol, le cyclohexanol, l'acide glycolique, le paracrésol et l'hydroxyquinoléine stabilisent également très bien les solutions aqueuses de peroxyde d'hydrogène au contact des supports des catalyseurs.

La quantité du composé organique stabilisateur qu'on peut utiliser est comprise par exemple entre 0,1 gramme par litre et la saturation, de préférence entre 2 à 10 grammes par litre et de manière encore plus préférée entre 3 à 7 grammes par litre.

Les solutions aqueuses peuvent contenir de 0,5 à 70 % en poids de peroxyde d'hydrogène, de préférence entre 1 à 30 % en poids et de manière encore plus préférée entre 5 à 20 % en poids.

La solution aqueuse stabilisée de peroxyde d'hydrogène selon l'invention peut être pompée sur le lit fixe du catalyseur mis à traiter par exemple à des débits horaires compris entre 0,5 l/h et 30 l/h et de préférence entre 5 l/h et 20 l/h pour 1 kilogramme d'oxydes métalliques du catalyseur formés après calcination et pendant une durée par exemple de 1 à 6 heures.

Le catalyseur peut comprendre au moins un métal actif ou composé de métal actif du groupe VI B et/ou VIII et son support minéral peut être de l'alumine, de la silice, de la silice alumine ou un support zéolitique, par exemple à structure faujasite.

On préfère opérer à l'abri de la lumière visible et à une température comprise entre 0 et 80°C et de préférence entre 10 et 40°C pour éviter une décomposition substantielle de peroxyde d'hydrogène.

Il peut être particulièrement avantageux de soumettre la solution d'ions métalliques provenant de l'étape b) à une étape de mise en contact avec une résine complexante ayant un pouvoir de complexation pour les métaux de la solution et l'on recueille une solution de peroxyde d'hydrogène, débarrassée d'au moins la majeure partie des métaux. Cette solution peut être réintroduite au moins en partie avec la solution de peroxyde d'hydrogène lors de l'étape b). Les métaux sont retenus sur la résine complexante sous forme de complexes chimiques, généralement inactifs vis-à-vis du peroxyde d'hydrogène. On soumet ensuite la résine complexante utilisée à une étape de régénération de manière à récupérer les métaux.

On peut utiliser par exemple des résines complexantes de diverses marques commerciales telles que par exemple DOULITE, AMBERLITE ou DOWEX dont le squelette polymérique peut être par exemple polyacrylique ou polystyrénique et les groupements fonctionnels de pouvoir complexant vis-à-vis des ions métalliques extraits sont par exemple des groupements amidoxime, iminodiacétique, aminophosphonique, etc...

Avec par exemple une résine DUOLITE ES 346, la solution recueillie à la sortie de la colonne de résine contient au plus 2 ppm de vanadium après un temps de passage de 6 heures. On pense que dans le cas d'un groupement amidoxime les ions métalliques sont retenus sur cette résine de DOULITE ES 846 sous forme d'amidoximates.

Enfin il a été constaté que les complexes des métaux formés sur la résine sont inactifs vis-à-vis du peroxyde d'hydrogène puisque la décomposition du peroxyde d'hydrogène est sensiblement nulle.

Les ions métalliques retenus sur la résine complexante peuvent être ensuite enlevés par des méthodes connues.

Les conditions opératoires de passage de la solution d'ions métalliques sur la résine complexante peuvent être les mêmes que celles énoncées plus haut lors du passage sur la colonne de démétallation proprement dite soit un débit de solution compis entre 0,5 et 30 litres/heure pour 1 kilogramme de résine pendant une durée de 1 à 6 heures, de préférence à l'abri de la lumière et à une température de 0 à 80°C et de préférence de 10 à 40°C.

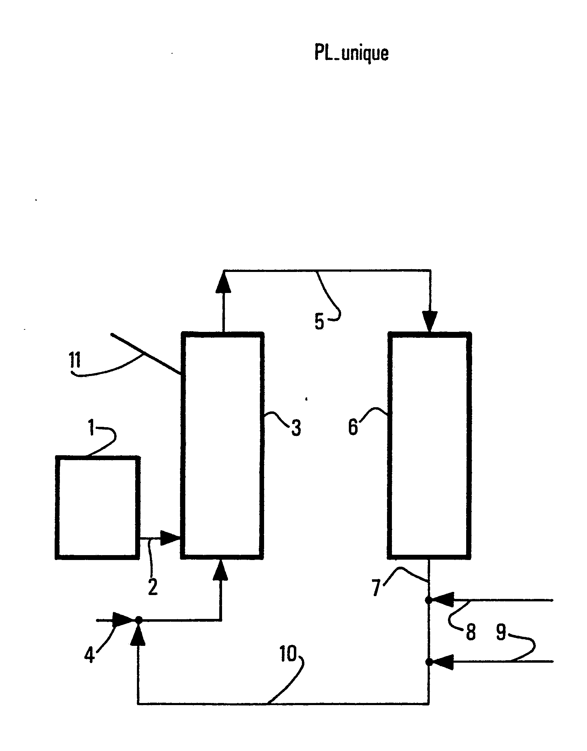

La figure illustre un appareillage permettant la mise en oeuvre du procédé.

Le catalyseur est calciné dans un four (1) de type connu. Il est introduit par la ligne (2) dans un réacteur de démétallation (3) opaque, thermostaté à l'ambiante par exemple par une circulation d'eau.

Une solution aqueuse de peroxyde d'hydrogène stabilisée suivant l'invention est envoyée par une ligne (4) dans le réacteur (3) et balaie le lit fixe de catalyseur usagé.

La solution aqueuse de peroxyde d'hydrogène et d'ions métalliques ainsi extraits est envoyée par une ligne (5) vers une colonne de rétention (6) opaque, thermostatée à l'ambiante et remplie d'une résine complexante. On récupère en fond de colonne (6) par une ligne (7) la solution de peroxyde d'hydrogène qui peut éventuellement être réintroduite par la ligne de recyclage (10). Les lignes 8 et 9 permettent d'apporter un appoint éventuel en peroxyde d'hydrogène et en stabilisant.

Le catalyseur de la majeure partie de ses métaux contaminants est retiré de la colonne de démétallation (3) par une ligne (11).

La résine est ensuite soumise à une étape de régénération de manière à récupérer les métaux.

On peut noter que le catalyseur se présente en lit fixe mais il peut également être disposé sous une autre forme par exemple sous forme de lit mobile ou fluidisé.

Le taux de démétallation en pourcentage poids est déterminé à partir des dosages des métaux du catalyseur avant et après extraction des métaux par la méthode de fluorescence X. Il est calculé de la manière suivante:

Taux de démétallation $= \frac{Qi-Qf}{Qi} \times 100$

$Qi =$ quantité en gramme de métal contenu dans le poids en grammes du catalyseur mis à traiter.
$Qf =$ quantité en gramme de métal contenu dans le poids du solide restant après extraction.

Le peroxyde d'hydrogène en solution aqueuse est dosé par la méthode de cérimétrie.

La consommation du peroxyde d'hydrogène exprimée en pourcentage molaire est déterminée par différence à partir des teneurs de la solution à l'entrée de la colonne de démétallation et de la solution recueillie à la sortie de la colonne de résine complexante de la façon suivante:

Consommation % molaire $= \frac{Ni-Nf}{Ni} \times 100$

$Ni =$ nombre total de moles de peroxyde d'hydrogène contenu dans le volume utilisé de la solution à l'entrée du réacteur colonne de démétallation.

$Nf =$ nombre total de mole de peroxyde d'hydrogène contenu dans le volume de la solution recueillie à la sortie de la colonne de résine complexante.

Les métaux dans la solution d'extraction sont dosés par la méthode spectroscopique de plasma.

Le soufre contenu dans la charge d'huile désasphaltée de BOSCAN avant et après les tests catalytiques est déterminé par la méthode de fluorescence.

L'hydrodésulfuration est exprimée en % HDS:

4

$$\% \text{ HDS} = \frac{So - S}{So} \times 100$$

So = pourcentage de soufre dans la charge avant test catalytique.
S = pourcentage de soufre dans la charge après test catalytique.
Les métaux (nickel, vanadium et fer) de la charge d'huile désasphaltée BOSCAN sont déterminés par absorption atomique et leurs taux d'élimination sont exprimés de la façon suivante:

$$\% \text{ HDM} = \frac{Mo - M}{Mo} \times 100$$

Mo, M = teneurs en métal nickel, vanadium et fer dans la charge avant et après le test catalytique.
Pour illustrer la présente invention, on fait référence aux exemples suivants:

**Exemple 1**

Un catalyseur nickel molybdène de départ contenant 1,75 % poids de nickel, 7 % poids de molybdène et 0 % poids de vanadium sur support minéral d'alumine macroporeuse de porosité égale à 105 cm$^3$/100 g et de surface spécifique égale à 110 m$^2$/g, de densité égale à 0,75 cm$^3$/g, est activé par calcination à 500°C pendant deux heures en présence d'air à un débit de 60 litres/heure pour 300 grammes de catalyseur puis par sulfuration par du diméthyldisulfure à 2 % poids dilué dans du gas-oil à 350°C, à VVH égal à 2 pendant cinq heures. Il est ensuite utilisé pendant 1000 heures pour l'hydrotraitement d'une huile désasphaltée de BOSCAN contenant 550 ppm de vanadium, 60 ppm de nickel et 5,06 % poids de soufre.
Après 1000 heures d'utilisation, le catalyseur usagé renferme (% poids):

| | | |
|---|---|---|
| Vanadium = 30,9 % | Nickel = 2,89 % | Molybdène = 2,60 % |
| Fer = 1,2 % | Soufre 19,5 % | Carbone 4,5 % |

Selon l'invention, le catalyseur usagé (300 grammes) est d'abord calciné à 500°C à un débit d'air de 60 litres/heure pendant 15 heures. La teneur du gaz en anhydride sulfureux a été à tout moment inférieure à 10 ppm. 99 % de soufre ont été ainsi éliminés du catalyseur usagé.
10 grammes de catalyseur après calcination sont ensuite mis dans un réacteur de démétallation opaque, rempli de billes de polyéthylène comme garnissage.
Quatre essais d'extraction de métaux en vue de comparaison sont effectués:
A. Catalyseur après calcination et mis en contact avec une solution aqueuse de peroxyde d'hydrogène, commerciale (9 % en poids) stabilisée avec l'acide L(+) ascorbique à 4,5 g/l selon l'invention
B. Catalyseur après calcination et mis en contact avec une solution aqueuse de peroxyde d'hydrogène commerciale (9 % poids) en l'absence d'acide L(+) ascorbique
C. Catalyseur usagé non calciné et mis en contact avec une solution aqueuse de peroxyde d'hydrogène, commerciale (9 % poids) stabilisée avec l'acide L(+) ascorbique à 4,5 g/l
D. Catalyseur usagé non calciné et mis en contact avec une solution aqueuse de peroxyde d'hydrogène commerciale (9 % poids) en l'absence d'acide L(+) ascorbique.
Le débit de pompage de la solution sur le lit fixe de 10 grammes de catalyseur est de 180 millilitres par heure, pendant 3 heures.
La température de la colonne de démétallation est thermostatée à 16°C.
La solution d'ions métalliques extraits sortant de la colonne de démétallation passe dans une seconde colonne contenant 100 grammes de résine complexante DUOLITE ES 346, également thermostatée à 16°C.

**Tableau I**

| essai | taux de démétallation (% poids) | | | | consommation H$_2$O$_2$ (% molaire) | teneur en vanadium de la solution recueillie à la sortie de la colonne DOULITE ES 346 (ppm) |
|---|---|---|---|---|---|---|
| | V | Ni | Fe | Mo | | |
| A | 85.3 | 80.2 | 75.0 | 71.0 | 33.05 | <2 |
| B | 70.8 | 53.0 | 65.3 | 65.0 | 74.26 | <2 |
| C | 80.7 | 76.2 | 70.0 | 60.8 | 82.13 | <2 |
| D | 64.8 | 46.7 | 57.2 | 60.2 | 100.00 | <2 |

Dans ce tableau, il ressort que le taux de démétallation mesuré sur le catalyseur traité selon l'invention (essai A) est le plus élevé et que la consommation du peroxyde d'hydrogène est la plus faible.
On peut également noter que la rétention des ions des métaux extraits sur la résine complexante DUOLITE ES 346 est pratiquement totale.

## Exemple 2

On se propose de réutiliser la solution de peroxyde d'hydrogène récupérée à la sortie de la colonne contenant la résine complexante DUOLITE ES 346.

On répète deux fois l'essai A de l'exemple 1 selon l'invention.

Les deux solutions récupérées contiennent chacune 6,05 % poids de peroxyde d'hydrogène. On réajuste leurs teneurs en peroxyde d'hydrogène à 9 % poids par addition de perhydrole.

Deux essais d'extraction de métaux identiques à l'essai A de l'exemple 1 ont été reproduits dans les conditions suivantes:

Essai I: sans addition supplémentaire d'acide L(+) ascorbique,

Essai II: addition de 0,243 gramme d'acide L(+) ascorbique dans les 540 millilitres recueillis (soit 10 % par rapport à la teneur utilisée initialement à 4,5 gramme/litre)

### Tableau II

| essai | taux de démétallation (% poids) | | | |
|-------|------|------|------|------|
| | V | Ni | Fe | Mo |
| I | 83.8 | 78.2 | 75.0 | 69.0 |
| II | 85.0 | 81.2 | 75.3 | 72.1 |

Les résultats de l'essai II montrent par comparaison à ceux obtenus de l'essai A de l'exemple 1 qu'on peut obtenir pratiquement les mêmes taux de démétallation.

## Exemple 3

On répète le traitement d'extraction des métaux selon le mode A de l'exemple 1 en faisant varier les débits de pompage de la solution de peroxyde d'hydrogène stabilisé selon l'invention. Les taux de démétallation déterminés sur les catalyseurs traités sont présentés dans le tableau III.

### Tableau III

| débit de pompage horaire de la solution $H_2O_2$ stabilisée (ml/heure) | taux de démétallation (% poids) | | | |
|-------|------|------|------|------|
| | V | Ni | Fe | Mo |
| 60 | 52.0 | 47.8 | 49.1 | 39.0 |
| 120 | 66.0 | 62.0 | 64.2 | 53.0 |
| 180 | 85.3 | 80.2 | 75.0 | 71.0 |
| 240 | 85.1 | 80.0 | 74.8 | 71.8 |
| 300 | 86.3 | 79.5 | 75.5 | 70.3 |

L'extraction des métaux atteint pratiquement la valeur maximale pour un débit de pompage égal à 18 litres/heure pour 1 kilogramme de catalyseur mis à traiter.

## Exemple 4

On répète le traitement d'extraction des métaux selon le mode A de l'exemple 1 et on détermine les taux de démétallation des catalyseurs traités en fonction de la durée de réaction.

Les résultats sont présentés dans le tableau IV.

**Tableau IV**

| durée d'extraction des métaux (heure) | taux de demétallation (% poids) | | | |
|---|---|---|---|---|
| | V | Ni | Fe | Mo |
| 1 | 44.1 | 39.6 | 40.8 | 44.0 |
| 2 | 72.2 | 63.6 | 68.0 | 68.0 |
| 3 | 85.3 | 80.2 | 75.0 | 71.0 |
| 4 | 88.9 | 82.0 | 80.0 | 77.2 |
| 5 | 93.0 | 83.7 | 82.7 | 78.4 |
| 6 | 93.7 | 83.9 | 83.5 | 79.8 |

Une durée par exemple de 5 heures donne des résultats particulièrement avantageux.

**Exemple 5**

On répète le traitement d'extraction des métaux selon le mode A de l'exemple 1 mais les essais sont effectués à différentes températures.

**Tableau V**

| température d'extraction (°C) | taux de démétallation (% poids) | | | | consommation $H_2O_2$ (% molaire) |
|---|---|---|---|---|---|
| | V | Ni | Fe | Mo | |
| 16 | 85.3 | 80.2 | 75.0 | 71.0 | 33.05 |
| 25 | 96.7 | 93.7 | 90.0 | 91.8 | 54.30 |
| 40 | 97.7 | 95.9 | 92.1 | 94.1 | 79.40 |
| 60 | 95.1 | 92.9 | 91.2 | 90.0 | 100.00 |

Les résultats présentés dans le tableau V montrent qu'il est avantageux d'effectuer l'extraction des métaux à une température au plus égale à 40°C.

**Exemple 6**

On répète le traitement d'extraction des métaux selon le mode A de l'exemple 1 mais cette fois en faisant varier les concentrations de peroxyde d'hydrogène stabilisé selon l'invention.

Les taux de démétallation et les consommations du peroxyde d'hydrogène sont présentés dans le tableau VI.

**Tableau VI**

| concentration $H_2O_2/H_2O$ (% poids) | taux de démétallation (% poids) | | | | consommation $H_2O_2$ (% molaire) |
|---|---|---|---|---|---|
| | V | Ni | Fe | Mo | |
| 3 | 71.0 | 52.1 | 70.0 | 69.0 | 82.5 |
| 6 | 78.0 | 66.2 | 72.0 | 70.0 | 44.8 |
| 9 | 85.3 | 80.2 | 75.0 | 71.0 | 33.0 |
| 15 | 92.7 | 85.7 | 82.1 | 83.1 | 36.1 |
| 20 | 93.1 | 86.6 | 83.9 | 84.9 | 40.1 |
| 30 | 94.4 | 88.1 | 85.1 | 89.5 | 44.7 |

Les exemples 7 à 9 ont pour but d'illustrer l'effet de stabilisation des solutions aqueuses de peroxyde d'hydrogène en présence de divers agents stabilisateurs selon l'invention.

**Exemple 7**

On répète l'exemple 1 selon l'invention en faisant varier la consommation en composé organique stabilisateur. Les résultats sont présentés dans le tableau VII.

7

**Tableau VII**

| Concentration acide L(+) ascorbique (g/l) | Taux de démétallation (% poids) | | | |
|---|---|---|---|---|
| | V | Ni | Fe | Mo |
| 0.55 | 67.5 | 62.6 | 57.0 | 52.5 |
| 2.50 | 76.2 | 71.0 | 66.0 | 60.9 |
| 4.50 | 85.5 | 80.2 | 75.0 | 71.0 |
| 6.50 | 86.2 | 80.9 | 75.9 | 70.5 |
| 12.00 | 84.3 | 79.2 | 74.5 | 68.6 |
| 14.80 | 83.9 | 78.8 | 73.2 | 68.1 |

**Exemple 8**

Dans le but de vérifier si l'acide L(+) ascorbique utilisé selon l'invention pour stabiliser le peroxyde d'hydrogène a le même effet de stabilisation vis-à-vis des sports minéraux autres que l'alumine macroporeuse de 105 cm³/100 g de porosité et de 110 m²/g de surface spécifique, on répète l'exemple 7 en changeant la nature des supports, la solution de peroxyde d'hydrogène étant stabilisée à une concentration constante égale à 4,5 grammes/litre pour tous les essais dont les résultats sont présentés dans le tableau VIII.

**Tableau VIII**

| Nature support | surface spécifique (m²/g) | Volume poreux (cm³/100g) | Taux de démétallation de vanadium (% poids) |
|---|---|---|---|
| Alumine | 12 | 39 | 84.2 |
| | 90 | 65.3 | 83.2 |
| | 230 | 60.7 | 70.4 |
| | 110 | 105 | 85.3 |
| Silice | 255 | 81 | 80.1 |
| Silicealumine | 380 | 90 | 83.1 |
| Zeolithe | 261 | 53 | 75.1 |

**Exemple 9**

On opère le traitement d'extraction des métaux selon le mode A de l'exemple 1 selon l'invention mais en utilisant différents agents stabilisateurs ou leurs mélanges, les concentrations utilisées étant égales pour tous les essais à 4,5 grammes/litre.

Les résultats sont présentés dans le tableau IX.

**Tableau IX**

| agent stabilisateur | taux de démétallation (% poids) | | | | consommation H₂O₂ (% molaire) |
|---|---|---|---|---|---|
| | V | Ni | Fe | Mo | |
| Acide citrique* | 87.3 | 82.1 | 77.3 | 84.4 | 38.7 |
| Acide maleïque* | 67.6 | 63.3 | 60.0 | 64.2 | 16.9 |
| Acide oxalique* | 79.4 | 74.5 | 71.0 | 70.1 | 18.2 |
| Acide salycilique** | 85.9 | 81.2 | 76.8 | 76.5 | 17.5 |
| | | | | 74.0 | 74.7 |
| 1.4 butanediol** | 86.9 | 82.1 | 78.1 | 78.4 | 30.6 |
| phénol* | 83.3 | 78.6 | 75.2 | 74.2 | 32.5 |

\* solution aqueuse ce péroxyde d'hydrogène à 9 % poids
\*\* solution aqueuse de péroxyde d'hydrogène à 20 % poids

L'effet de stabilisation du peroxyde d'hydrogène par les composés organiques permet d'obtenir des taux de démétallation généralement élevés dans tous les cas. Par contre les bilans de consommation de peroxyde semblent indiquer que la vitesse de décomposition du peroxyde d'hydrogène par les ions des métaux extraits, au niveau du lit de catalyseur mis à extraire, dépend de la nature du composé stabilisateur utilisé. Les résultats de ces essais montrent que les meilleurs stabilisateurs du peroxyde d'hydrogène pour la régénération des catalyseurs contaminés par les métaux du groupe vanadium, nickel et fer sont les acides salicylique, citrique, maléique, oxalique, L(+) ascorbique, le 1-4 butanediol et le phénol.

**Exemple 10**

Cet exemple veut illustrer et comparer les activités catalytiques des catalyseurs nickel molybdène, alumine de départ, usagé et régénéré selon l'invention. Ces catalyseurs ont été réactivés par calcination et par sulfuration dans les conditions indiquées dans l'exemple 1.

L'hydrotraitement d'une huile désasphaltée de BOSCAN contenant 550 ppm en vanadium, 60 ppm en nickel, 5,06 % poids de soufre dans les conditions opératoires suivantes: températures 380 et 400°C, pression totale 100 bars, VVH = 1, durée d'hydrotraitement 100 heures, conduit à des taux d'hydrodémétallation de la charge en nickel et vanadium et à des taux d'hydrodésulfuration présentés dans le tableau X.

**Tableau X**

| surface | taux de démétallation de la charge en nickel et vanadium (% poids) | | taux d'hydrodésulfura-tion de la charge (% poids) | | caractéristiques physiques des catalyseurs | | |
|---|---|---|---|---|---|---|---|
| | | | | | | volume spécifique (m²/g) | |
| | 380°C | 400°C | 380°C | 400°C | poreux (cm³/100 g) | spécifique (m²/g) | densité (cm³/g) |
| catalyseur frais Ni.Mo/Al₂O₃ | 84 | 96 | 34 | 54 | 105 | 110 | 0.75 |
| catalyseur usagé | 43 | 55 | 27 | 40 | 5-6 | 10-15 | 2.50 |
| catalyseur régénéré selon l'invention (mode A) | 69 | 85 | 30 | 49 | 86.2 | 82.1 | 0.96 |

Bien que l'extraction des métaux du catalyseur usagé selon l'invention est limitée à 85 % (selon mode A de l'exemple 1), le catalyseur ainsi traité et réactivé présente des valeurs de volume poreux et de surface spécifique nettement supérieures à celles du catalyseur usagé.

Les activités catalytiques d'hydrodémétallation de la charge en nickel et vanadium et d'hydrodésulfuration se rapprochent de celles du catalyseur frais de départ.

Les résultats montrent qu'on peut retrouver, par rapport au catalyseur frais de départ, une activité catalytique d'hydrodémétallation de la charge en nickel et vanadium de 69 : 84 soit 82 % à 380°C et 85 : 96 soit 88,5 % à 400°C, et pour l'hydrodésulfuration de la charge de 30 : 34 soit 88 % à 380°C et de 49 : 54 soit 90,7 % à 400°C.

Le procédé de régénération selon l'invention s'applique donc aussi bien à l'hydrodémétallation qu'à l'hydrodésulfuration d'une charge lourde de pétrole.

# 0 198 730

## Revendications

1. Procédé de régénération d'un catalyseur au mois partiellement désactivé provenant du traitement d'une charge d'hydrocarbures renfermant au moins un hétéroélément du groupe soufre, oxygène et azote et au moins un métal du groupe vanadium, nickel et fer, ladite désactivation provenant du dépôt d'au moins un métal dudit groupe sur le catalyseur, ledit catalyseur étant initialement constitué d'un support minéral et d'au moins un métal actif ou composé de métal actif du groupe VI B et/ou VIII,

le procédé comportant une calcination puis la mise en contact de ce catalyseur avec une solution de peroxyde d'hydrogène et étant caractérisé par les étapes successives suivantes:

a) On calcine le catalyseur en présence d'un gaz renfermant de l'oxygène de façon à éliminer au moins 90 % du soufre,

b) On met en contact le catalyseur provenant de l'étape a) avec une solution aqueuse de peroxyde d'hydrogène renfermant au moins un composé organique stabilisateur comportant au moins un groupement fonctionnel polaire de façon à enlever au moins 10 % des métaux déposés du groupe vanadium, nickel et fer et,

c) On sépare le catalyseur régénéré de la solution aqueuse d'ions métalliques.

2. Procédé de régénération selon le revendication 1, caractérisé en ce que le composé organique est choisi parmi les acides carboxyliques, les alcools, les acides alcools, les amines alcools, les phénols et leurs mélanges.

3. Procédé de régénération selon la revendication 2, caractérisé en ce que le composé organique est choisi dans le groupe formé par l'acide L(+) ascorbique, l'acide citrique, l'acide salicylique, l'acide maléique, l'acide oxalique, le 1-4 butanediol et le phénol.

4. Procédé de régénération selon l'une des revendications 1 à 3, caractérisé en ce que le support minéral du catalyseur est l'alumine, la silice, une silice-alumine ou un support zéolitique.

5. Procédé de régénération selon l'une des revendications 1 à 4, caractérisé en ce que l'on opère la calcination dudit catalyseur en présence d'un gaz contenant de l'oxygène dont le débit horaire est tel que le rapport nombre de moles oxygène/atomes-grammes de soufre est au moins égal à 2 et que la teneur en anhydride sulfureux est à chaque instant inférieure à 10 ppm, à une température comprise entre 300 et 600°C et pendant une durée de 2 à 15 heures.

6. Procédé de régénération selon l'une des revendications 1 à 5, caractérisé en ce que la concentration du peroxyde d'hydrogène dans l'eau est de 0,5 à 70 % en poids, la concentration du composé organique comprise entre 0,1 gramme par litre et la saturation et en ce que la température d'extraction des métaux est de 0 à 80°C.

7. Procédé de régénération selon l'une des revendications 1 à 6, caractérisé en ce que la concentration du peroxyde d'hydrogène dans l'eau est de 1 à 30 % en poids, la concentration de composé organique est comprise entre 2 et 10 grammes par litre et la température est comprise entre 10 à 40°C.

8. Procédé de régénération selon l'une des revendications 1 à 7 caractérisé en ce que l'on effectue la mise en contact du catalyseur calciné à l'abri de la lumière, à un débit horaire compris entre 0,5 et 30 litres de solution du peroxyde d'hydrogène stabilisé pour 1 kilogramme de catalyseur calciné pendant une durée de 1 à 6 heures.

9. Procédé de régénération selon l'une des revendications 1 à 8, caractérisé en ce que l'on met en contact la solution aqueuse d'ions métalliques avec une résine complexante ayant un pouvoir de complexation pour les métaux de la solution et l'on recueille une solution de peroxyde d'hydrogène débarrassée d'au moins la majeure partie des métaux.

10. Procédé de régénération selon l'une des revendications 1 à 9, caractérisé en ce que l'on met en contact ladite solution aqueuse d'ions resultant de l'étape b) avec une résine complexante comprenant au moins un groupement fonctionnel ayant un pouvoir de complexation des ions métalliques du groupe vanadium, nickel et fer à un débit horaire compris entre 0,5 et 30 litres par kilogramme de résine pendant une durée de 1 à 6 heures et à une température de 0 à 80°C, et en ce que l'on soumet ensuite la résine complexante à une étape de régénération de manière à récupérer les métaux.

## Patentansprüche

1. Verfahren zur Regenerierung eines wenigstens teilweise desaktivierten Katalysators, der aus der Behandlung einer Kohlenwasserstoffcharge stammt, die wenigstens ein Heteroelement bzw. ein Heteroatom der Gruppe Schwefel, Sauerstoff und Stickstoff und wenigstens ein Metall der Gruppe Vanadium, Nickel und Eisen enthält, wobei diese Desaktivierung durch die Abscheidung wenigstens eines Metalls dieser Gruppe auf den Katalysator hervorgerufen wird, wobei der Katalysator ursprünglich gebildet ist durch einen mineralischen Träger und wenigstens ein metallisches aktives Element oder eine aktive Metallverbindung der Gruppe VI B und/oder VIII,

wobei das Verfahren eine Kalzinierung, dann Kontaktierung dieses Katalysators mit einer Wasserstoffperoxidlösung umfaßt und gekennzeichnet ist durch die folgenden Schritte:

a) man kalziniert den Katalysator in Anwesenheit eines Sauerstoff enthaltenden Gases derart, daß wenigstens 90 % Schwefel entfernt werden,

b) man kontaktiert den aus der Stufe a) stammenden Katalysator mit einer wässrigen Wasserstoffperoxidlösung, die wenigstens eine organische Stabilisatorverbindung mit wenigstens einer polaren funktionellen Gruppe derart enthält, daß wenigstens 10 % der abgeschiedenen Metalle der Gruppe Vanadium, Nickel und Eisen entfernt werden und

c) man trennt den regenerierten Katalysator aus der wässrigen Metallionenlösung ab.

2. Verfahren zur Regenerierung nach Anspruch 1, dadurch gekennzeichnet, daß die organische Verbindung gewählt ist aus den Carboxylsäuren, den Alkoholen, den alkoholischen Säuren, den Aminalkoholen, den Phenolen und ihren Mischungen.

3. Verfahren zur Regenerierung nach Anspruch 2, dadurch gekennzeichnet, daß die organische Verbindung gewählt ist aus der Gruppe, die gebildet ist aus L(+) Askorbinsäure, der Zitronensäure, der Salicylsäure, der Maleinsäure, der Oxalsäure, dem 1-4 Butandiol sowie Phenol.

4. Verfahren zur Regenerierung nach einem der Ansprüche 1 bis 3, dadurch gekennzeichnet, daß der mineralische Träger des Katalysators Aluminiumoxid, Siliziumoxid, ein Siliziumoxid-Aluminiumoxid oder ein zeolithischer Träger ist.

5. Verfahren zur Regenerierung nach einem der Ansprüche 1 bis 4, dadurch gekennzeichnet, daß die Kalzinierung dieses Katalysators in Anwesenheit eines Gases durchgeführt wird, welches Sauerstoff enthält, dessen stündlicher Durchsatz derart ist, daß das Verhältnis der Molzahlen Sauerstoff/Grammatomen Schwefel wenigstens gleich 2 ist und daß der Gehalt an Schwefelsäureanhydrid in jedem Augenblick unter 10 ppm bei einer Temperatur zwischen 300 und 600°C und während eines Zeitraums von 2 bis 15 Stunden beträgt.

6. Verfahren zur Regenerierung nach einem der Ansprüche 1 bis 5, dadurch gekennzeichnet, daß die Konzentration des Wasserstoffperoxids in Wasser 0,5 bis 70 Gew.-%, die Konzentration der organischen Verbindung zwischen 0,1 g/l und Sättigung beträgt und daß die Extraktionstemperatur der Metalle zwischen 0 und 80°C liegt.

7. Verfahren zur Regenerierung nach einem der Ansprüche 1 bis 6, dadurch gekennzeichnet, daß die Konzentration des Wasserstoffperoxids in Wasser 1 bis 30 Gew.-%, die Konzentration der organischen Verbindung zwischen 2 und 10 g/l und die Temperatur zwischen 10 und 40°C beträgt.

8. Verfahren zur Regenerierung nach einem der Ansprüche 1 bis 7, dadurch gekennzeichnet, daß die Kontaktierung des kalzinierten Katalysators lichtgeschützt bei einem stündlichen Durchsatz zwischen 0,5 und 30 l der stabilisierten Wasserstoffperoxidlösung pro kg kalzinierten Katalysators während eines Zeitraums von 1 bis 6 Stunden beträgt.

9. Verfahren zur Regenerierung nach einem der Ansprüche 1 bis 8, dadurch gekennzeichnet, daß man die wässrige Metallionenlösung mit einem komplexbildenden Harz kontaktiert, das ein Komplexbildungsvermögen für die Metalle der Lösung besitzt und daß man eine Wasserstoffperoxidlösung gewinnt, die von wenigstens dem größeren Teil der Metalle befreit wurde.

10. Verfahren Regenerierung nach einem der Ansprüche 1 bis 9, dadurch gekennzeichnet, daß man diese wässrige aus der Stufe b) stammende Ionenlösung mit einem komplexbildenden Harz kontaktiert, das wenigstens eine funktionelle Gruppe umfaßt, die ein Komplexbildungsvermögen der metallischen Ionen der Gruppe Vanadium, Nickel und Eisen bei einem stündlichen Durchsatz zwischen 0,5 und 30 l/kg Harz während eines Zeitraums von 1 bis 6 Stunden bei einer Temperatur von 0 bis 80°C hat und daß man anschließend das Komplexbildende Harz einer Regenerierungsstufe derart aussetzt, daß die Metalle gewonnen werden.

## Claims

1. A process for regenerating an at least partially deactivated catalyst after its use for the treatment of a hydrocarbon charge containing at least one heteroelement from the sulfur, oxygen and nitrogen group and at least one metal of the vanadium, nickel and iron group, said deactivation resulting from the deposit of at least one metal from said group onto the catalyst, said catalyst initially consisting of an inorganic carrier and at least one active metal or compound of an active metal from group VIB and/or VIII, said process, which comprises a roasting followed with a step of contacting said catalyst with a hydrogen peroxide solution, being characterized by the following successive steps:

a) The catalyst is roasted in the presence of an oxygen-containing gas so as to remove at least 90 % of the sulfur,

b) the catalyst obtained in step a) is contacted with a hydrogen peroxide aqueous solution containing at least one organic stabilizing compound including at least one polar functional group so as to remove at least 10 % of the deposited metals of the vanadium, nickel and iron group, and

c) the regenerated catalyst is separated from the aqueous solution of metal ions.

2. A regeneration process according to claim 1, characterized in that the organic compound is selected from carboxylic acids, alcohols, acid alcohols, amines alcohols, phenols or mixtures thereof.

3. A regeneration process according to claim 2, characterized in that the organic compound is selected from the group formed of L(+) ascorbic acid, citric acid, salicylic acid, maleic acid, oxalic acid, 1-4 butanediol and phenol.

4. A regeneration process according to one of claims 1 to 3, characterized in that the inorganic carrier of the catalyst is alumina, silica, a silica-alumina or a zeolite carrier.

5. A regeneration process according to one of claims 1 to 4, characterized in that the catalyst roasting step is conducted in the presence of an oxygen-containing gas at such a flow rate that the ratio number of oxygen moles/gram-atoms of sulfur is at least 2 and the sulfurous anhydride content is, at any time, lower than 10 ppm, at a temperature ranging from 300 to 600°C, for 2 to 15 hours.

6. A regeneration process according to one of claims 1 to 5, characterized in that the hydrogen peroxide concentration in water is from 0.5 to 70 % by weight, the concentration of organic compound from 0.1 gram per liter up to saturation and the extraction temperature of the metals from 0 to 80°C.

7. A regeneration process according to one of clams 1 to 6, characterized in that the hydrogen peroxide concentration in water is from 1 to 30 % by weight, the organic compound concentration from 2 to 10 grams per liter and the temperature from 10 to 40°C.

8. A regeneration process according to one of claims 1 to 7, characterized in that the roasted catalyst contacting step is performed in the absence of light, at a flow rate of 0.5 to 30 liters per hour of stabilized hydrogen peroxide solution per kilogram of roasted catalyst, for 1 to 6 hours.

9. A regeneration process according to one of claims 1 to 8, characterized in that the aqueous solution of metal ions is contacted with a complexing resin having a complexing power for the metals of the solution, and the recovered hydrogen peroxide solution is free of at least the major part of the metals.

10. A regeneration process according to one of claims 1 to 9, characterized in that the aqueous solutions of ions obtained in step b) is contacted with a complexing resin comprising at least one functional group having a complexing power for ions of metals from the vanadium, nickel and iron group, at a flow rate of 0.5 to 30 liters per hour per kilogram of resin, for 1 to 6 hours and at a temperature of 0 to 80°C, and in that the complexing resin is thereafter subjected to a regeneration step for recovering the metals therefrom.

PL_unique